(19) Europäisches Patentamt
European Patent Office
Office européen des brevets

(11) Veröffentlichungsnummer : **0 114 151**
**B1**

(12) # EUROPÄISCHE PATENTSCHRIFT

(45) Veröffentlichungstag der Patentschrift : **11.11.87**

(51) Int. Cl.⁴ : **C 08 L 63/00**, C 08 L 61/34, C 08 G 59/40, C 08 G 14/06

(21) Anmeldenummer : **84810012.9**

(22) Anmeldetag : **09.01.84**

(54) **Härtbare Epoxidharzmischungen enthaltend Imidverbindungen und Kondensationsprodukte aus Phenolen, Aminen und Aldehyden oder Ketonen.**

(30) Priorität : **13.01.83 CH 175/83**

(43) Veröffentlichungstag der Anmeldung : **25.07.84 Patentblatt 84/30**

(45) Bekanntmachung des Hinweises auf die Patenterteilung : **11.11.87 Patentblatt 87/46**

(84) Benannte Vertragsstaaten : **CH DE FR GB IT LI NL SE**

(56) Entgegenhaltungen :
**EP-A- 0 066 447**
**DE-A- 2 025 159**
**DE-A- 2 217 099**
**DE-A- 2 651 172**
**FR-A- 2 355 047**
**GB-A- 1 032 884**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Haug, Theobald, Dr.**
**Untere Flühackerstrasse 12**
**CH-4402 Frenkendorf (CH)**
Erfinder : **Stockinger, Friedrich**
**Stutzrain 4**
**CH-4434 Hölstein (CH)**

**EP 0 114 151 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft härtbare Mischungen aus Epoxidverbindungen, Mono- oder Polyimiden bestimmter ungesättigter Dicarbonsäuren und im sauren Medium hergestellten Kondensationsprodukten aus bestimmten Phenolen, bestimmten Aminen und Aldehyden oder Ketonen.

Es ist aus der FR-2 201 313 bekannt, dass man Epoxidharze mit Maleinimidgruppen aufweisenden Präpolymeren härten kann. Zur Verbesserung der Eigenschaften der Formstoffe auf Basis von Epoxidharzen und Bis-maleinimiden wurden bereits mehrfach vorgeschlagen, die härtbaren Mischungen zu modifizieren. So wird in DE-C-2 728 843 offenbart, den Mischungen aus Epoxidharz und Bis-maleinimiden als Modifizierungskomponente ein gegebenenfalls substituiertes Aminophenol zuzusetzen. Zur Aushärtung solcher Mischungen werden allerdings lange Härtungszeiten und hohe Härtungstemperaturen benötigt. In der JP-A-53 078 299 werden als Modifizierungskomponente für härtbare Mischungen aus Epoxidharzen und Bis-imiden Reaktionsprodukte aus Phenolen und Anhydro-formaldehyd-anilin vorgeschlagen. Bekanntlich wird Anhydro-formaldehyd-anilin durch Phenole in der Hitze gespalten (s. Methoden der Organischen Chemie (Houben-Weyl), 1963, Band XIV/2, Seite 294), wobei N-(p-Hydroxybenzyl)-aniline entstehen.

Es wurde nun gefunden, dass im sauren Medium hergestellte Kondensationsprodukte aus bestimmten Phenolen, bestimmten aromatischen Aminen und Aldehyden oder Ketonen wertvolle Modifizierungsmittel für härtbare Mischungen auf Basis von Epoxidharzen und Mono- oder Polyimiden bestimmter ungesättigter Dicarbonsäuren darstellen, da sie in diesen Mischungen besser verarbeitbar sind und die daraus hergestellten Formstoffe eine bessere Chemikalienbeständigkeit und hervorragende Beständigkeit gegen siedendes Wasser aufweisen.

Gegenstand der vorliegenden Erfindung sind somit härtbare Gemische, enthaltend

(a) Epoxidverbindungen mit durchschnittlich mehr als einer 1,2-Epoxidgruppe pro Molekül,

(b) Mono- oder Polyimide ungesättigter Dicarbonsäuren der allgemeinen Formel I

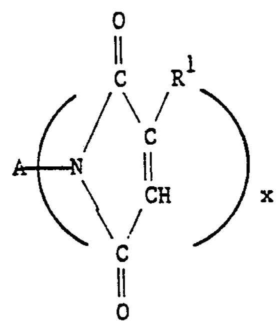

(I)

in der A einen x-wertigen organischen Rest mit mindestens 2 und höchstens 30 C-Atomen, $R^1$ ein H-Atom oder Methyl und x die Zahl 1, 2 oder 3 bedeuten, und

(c) im sauren Medium hergestellte Kondensationsprodukte aus Phenolen, Aminen und Aldehyden oder Ketonen, die erhältlich sind, indem man

(1) substituierte einwertige Phenole, die in p-Stellung und in einer der beiden o-Stellungen oder in beiden o-Stellungen unsubstituiert sind, unsubstituierte zweiwertige einkernige Phenole oder unsubstituierte oder substituierte zwei- oder mehrwertigen zwei- oder mehrkernige Phenole, die mindestens zwei zur Umsetzung mit Aldehyd oder Keton reaktive Kernstellen aufweisen,

(2) substituierte aromatische Monoamine, die mindestens eine, vorzugsweise mindestens zwei, zur Umsetzung mit Aldehyd oder Keton reaktive Kernstellen aufweisen, unsubstituierte aromatische ein- oder zweikernige Diamine oder substituierte aromatische ein- oder zweikernige Diamine, die mindestens zwei zur Umsetzung mit Aldehyd oder Keton reaktive Kernstellen aufweisen und

(3) Aldehyde oder Ketone bei einem pH-Wert von höchstens 6 miteinander umsetzt, wobei im Reaktionsgemisch das Mischungsverhältnis von Phenol zu Amin zu Aldehyd oder Keton 1 : 1 : 1,2 bis 6 : 1 : 8, vorzugsweise 2 : 1 : 4 bis 6 : 1 : 8, insbesondere 3 : 1 : 5 bis 6 : 1 : 8, Mole und im Falle eines substituierten mehrwertigen mehrkernigen Phenols 0,344 : 1 : 1,2 bis 6 : 1 : 8 Mole beträgt, und gegebenenfalls (d) Härtungsbeschleuniger in einer Menge von 0,01 bis 10 Gew.%, bezogen auf das Gesamtgewicht von (a), (b) und (c),
wobei im härtbaren Gemisch pro 1 Aminwasserstoffäquivalent mindestens 1 Aequivalent Imidgruppe und pro 1 Epoxidäquivalent mindestens 1 Aequivalent phenolische Hydroxylgruppe vorhanden sind.

Vorzugsweise enthalten die erfindungsgemässen Mischungen als Epoxidverbindungen (a) solche mit aromatischen Gruppierungen im Molekül, wie beispielsweise Polyglycidyläther von mehrwertigen Phenolen oder Polyglycidylester von aromatischen mehrbasischen Carbonsäuren, als Verbindungen (b) Bis-maleinimide der Formel I, worin A einen aromatischen oder aliphatischen Rest und $R^1$ ein H-Atom

bedeuten und x für die Zahl 2 steht, und als Kondensationsprodukte (c) solche, worin die Reaktionskomponente (1) substituierte einwertige Phenole, die in p-Stellung und in einer der beiden o-Stellungen oder in beiden o-Stellungen unsubstituiert sind, oder substituierte zwei- oder mehrwertige, zwei- oder mehrkernige Phenole, die mindestens zwei zur Umsetzung mit Aldehyd oder Keton reaktive Kernstellen aufweisen, darstellen, und die Reaktionskomponente (2) substituierte aromatische Monoamine, die mindestens eine, vorzugsweise zwei, zur Umsetzung mit Aldehyd oder Keton reaktive Kernstellen aufweisen, oder unsubstituierte oder substituierte aromatische zweikernige Diamine, die mindestens zwei zur Umsetzung mit Aldehyd oder Keton reaktive Kernstellen aufweisen, darstellen.

Die erfindungsgemässen Mischungen enthalten insbesondere als Epoxidverbindungen (a) die Polyglycidyläther von zwei- oder mehrwertigen, zwei- oder mehrkernigen Phenolen, als Verbindungen (b) Bis-maleinimide der Formel I, worin A einen aromatischen Rest darstellt, $R^1$ ein H-Atom bedeutet und x für die Zahl 2 steht, und als Kondensationsprodukte (c) solche, worin die Reaktionskomponente (1) o- oder p-Alkylphenol oder in o,o'-Stellung substituiertes zweiwertiges zweikerniges Phenol darstellt, die Reaktionskomponente (2) o- oder p-Toluidin, 2,6-Diäthylanilin, 4,4'-Diaminodiphenylsulfon oder 3,3'-Dimethyl-4,4'-diaminodiphenylmethan darstellt und worin in die Reaktionskomponente (3) Form-, Acet- oder Propionaldehyd oder Aceton ist.

Ferner sind in den erfindungsgemässen Mischungen solche Kondensationsprodukte (b) bevorzugt, die bei einem pH-Wert von 5,5 bis 0,5 hergestellt worden sind.

Das Mischungsverhältnis zwischen den Polyimiden der Formel I und den Kondensationsprodukten (c) kann in einem weiten Bereich variieren. Es wird so gewählt, dass die Anzahl der Aequivalente Imidgruppe mindestens gleich der Anzahl an Aminwasserstoffäquivalenten ist. Vorzugsweise ist in den erfindungsgemässen härtbaren Mischungen ein äquivalenter Ueberschuss an Imidgruppen, bezogen auf die Aequivalente Aminwassertoff, vorhanden. Dieser kann ein bis zu 5-facher Ueberschuss sein. Insbesondere sind in den härtbaren Mischungen pro 1 Aequivalent Aminwasserstoff 1,3 bis 3 Aequivalente Imidgruppen vorhanden.

Desgleichen ist es möglich, einen geringen Ueberschuss an phenolischen Hydroxylgruppen, bezogen auf die Aequivalente Epoxidgruppe, in den härtbaren Mischungen einzusetzen. Dieser Ueberschuss kann bis zu 1,8 Aequivalente phenolische Hydroxylgruppe pro 1 Aequivalent Epoxidgruppe betragen.

Als Epoxidverbindungen (a), die in den härtbaren Gemischen eingesetzt werden können, eignen sich alle Typen von Epoxidharzen, wie beispielsweise solche, die direkt an Sauerstoff-, Stickstoff- oder Schwefelatome gebundene Gruppen der Formel II

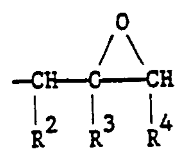

(II)

worin entweder $R^2$ und $R^4$ je ein Wasserstoffatom darstellen, in welchem Fall $R^3$ dann ein Wasserstoffatom oder eine Methylgruppe bedeutet, oder $R^2$ und $R^4$ zusammen $-CH_2CH_2-$ darstellen, in welchem Fall $R^3$ dann ein Wasserstoffatom bedeutet, enthalten.

Als Beispiele solcher Harze seien Polyglycidyl- und Poly(β-methyl-glycidyl)-ester genannt, die man durch Umsetzung einer zwei oder mehr Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z. B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren wie Tetrahydrophthalsäure, 4-Methyltetrahydrophthalsäure, Hexahydrophthalsäure und 4-Methylhexahydrophthalsäure, Hexahydrophthalsäure und 4-Methylhexahydrophthalsäure und von aromatischen Polycarbonsäuren wie Phthalsäure, Isophthalsäure und Terephthalsäure ableiten.

Weitere Beispiele sind Polyglycidyl- und Poly-(β-methylglycidyl)-äther, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Aether lassen sich mit Poly-(epichlorhydrin) aus acyclischen Alkoholen wie Aethylenglykol, Diäthylenglykol und höheren Poly-(oxyäthylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit und Sorbit, aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3- und aus Alkoholen mit aromatischen Kernen wie N,N-Bis-(2-hydroxyäthyl)-anilin und p,p'-Bis-(2-hydroxyäthylamino)-diphenylmethan herstellen. Man kann sie ferner aus einkernigen Phenolen wie Resorcin und Hydrochinon sowie mehrkernigen Phenolen wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan (sonst als Bisphenol A bekannt) und 2,2-Bis-(3,5-dibrom-4-hydroxyphenyl)-propan sowie aus Aldehyden wie Formaldehyd, Acetaldehyd, Chloral und Furfurol, mit Phenolen wie Phenol selbst und durch Chloratome oder Alkylgruppen mit jeweils bis zu neuen Kohlenstoffatomen ringsubstituiertem Phenol wie 4-Chlorphenol, 2-Methylphenol und 4-tert.-Butylphenol gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffatome enthaltenden Aminen wie Anilin, n-Butylamin, Bis-(4-aminophenyl)-methan und Bis-(4-methylaminophenyl)-methan erhalten werden. Triglycidylisocyanurat sowie N,N'-Diglycidylderivate von cyclischen Alkylenharnstoffen wie Aethylenharnstoff und 1,3-Propylenharnstoff, und Hydantoinen, wie 5,5-Dimethylhydantoin.

Poly-(S-glycidyl)-verbindungen sind zum Beispiel die Di-S-glycidylderivate von Dithiolen wie Aethan-1,2-dithiol und Bis-(4-mercaptomethylphenyl)-äther.

Beispiele für Epoxidharze mit Gruppen der Formel II, worin $R^2$ und $R^4$ zusammen eine $-CH_2CH_2-$ Gruppe bedeuten, sind Bis-(2,3-epoxycyclopentyl)-äther, 2,3-Epoxycyclopentyl-glycidyläther und 1,2-Bis-(2,3-epoxycyclopentyloxy)-äthan.

In Betracht kommen auch Epoxidharze, in welchen die 1,2-Epoxidgruppen an Heteroatome verschiedener Art gebunden sind, z. B. das N,N,O-Triglycidylderivat des 4-Aminophenols, der Glycidyläther/Glycidylester der Salicylsäure oder p-Hydroxybenzoesäure, N-Glycidyl-N'-(2-glycidyloxypropyl)-5,5-dimethylhydantoin und 2-Glycidyloxy-1,3-bis-(5,5-dimethyl-1-glycidylhydantoinyl-3) propan.

Gewünschtenfalls kann man Epoxidharzgemische verwenden.

Bevorzugte Epoxidharze sind solche mit einer aromatischen Gruppierung im Molekül, wie beispielsweise Polyglycidyläther von mehrwertigen Phenolen oder die N-Glycidylverbindungen aromatischer Amine.

Speziell bevorzugte Epoxidharze sind die Polyglycidyläther von mehrwertigen Phenolen, wie beispielsweise die Polyglycidyläther des 2,2-Bis-(4-hydroxyphenyl)-propans, des Bis-(4-hydroxyphenyl)-methans, des 2,2-Bis-(p-hydroxytetrabromphenyl)-propans, des Tetra-(p-hydroxyphenyl)-äthans oder eines aus Formaldehyd und Phenol oder durch ein Chloratom oder eine Alkylgruppe substituiertem Phenol gebildeten Novolaks mit einem 0,5 val/kg übersteigenden 1,2-Epoxidgehalt, sowie die durch Glycidylierung von 4,4'-Diaminodiphenylmethan erhältliche Poly-(N-Glycicyl)-verbindung.

Die Mono- und Polyimide der Formel I stellen wie die zuvor genannten Epoxidverbindungen bekannte Verbindungen dar und können durch Anwendung der in der US-3 010 290 und in der GB-1 137 592 beschriebenen Methoden durch Umsetzen der entsprechenden Diamine mit den ungesättigten Dicarbonsäureanhydriden in einem polaren Lösungsmittel und in Gegenwart eines Katalysators hergestellt werden.

Das Symbol A in der Formel I kann beispielsweise einen linearen oder verzweigten Alkylenrest mit weniger als 20 Kohlenstoffatomen, einen Phenylenrest, einen Cyclohexylenrest oder einen Rest der Formel

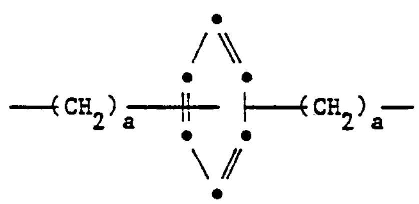

in der a eine ganze Zahl von 1 bis 3 darstellt, bedeuten.

Das Symbol A kann auch zwei oder mehrere Phenylen- oder Cyclohexylenreste umfassen, die direkt oder durch eine einfache Valenzbindung oder durch ein Atom oder eine inerte Gruppe, wie beispielsweise Sauerstoff- oder Schwefelatome, Alkylengruppen mit 1 bis 3 Kohlenstoffatomen oder über folgende Gruppen —CO—, $-SO_2-$, —NR—(R = Alkyl), —N = N—, —CONH—, —COO—, —CONH—A—NHCO—, $O = P(O-)_3$, $S = P(O-)_3$ verbunden sind.

Ausserdem können die verschiedenen Phenylen- oder Cyclohexylen-Reste durch Alkylgruppen, z. B. Methylgruppen, Hydroxyl- oder Carboxylgruppen substituiert sein. Als spezielle Beispiele für Poly-imide der Formel I seien genannt :

N-Phenylmaleinimid,
N-o-Hydroxyphenylmaleinimid,
N-p-Carboxylphenylmaleinimid,
N,N'-Aethylen-bis-maleinimid,
N,N'-Hexamethylen-bis-maleinimid,
N,N'-m-phenylen-bis-maleinimid,
N,N'-p-Phenylen-bis-maleinimid,
N,N'-4,4'-Diphenylmethan-bis-maleinimid,
N,N'-4,4'-3,3'-Dichlor-diphenylmethan-bis-maleinimid,
N,N'-4,4'-Diphenyläther-bis-maleinimid,

N,N'-4,4'-Diphenylsulfon-bis-maleinimid,
N,N'-4,4'-Dicyclohexylmethan-bis-maleinimid,
N,N'-α,α'-4,4'-Dimethylencyclohexan-bis-maleinimid,
N,N'-m-Xylylen-bis-maleinimid,
N,N'-p-Xylylen-bis-maleinimid,
N,N'-4,4'-Diphenylcyclohexan-bis-maleinimid,
N,N'-m-Phenylen-bis-citraconimid,
N,N'-4,4'-Diphenylmethan-bis-citraconimid,
N,N'-4,4'-2,2-Diphenylpropan-bis-maleinimid,
das N,N',N''-Trismaleinimid des Tris-(4-aminophenyl)-phosphats und
das N,N',N''-Trismaleinimid des Tris-(4-aminophenyl)-thiophosphats.

Man kann auch Mischungen von zwei oder mehreren dieser Polyimide verwenden.

Die im sauren Medium erhältlichen Kondensationsprodukte (c) können nach den in « Methoden der organischen Chemie (Houben-Weyl) », Band XIV/2 (1963), Seite 201 bis 213, oder in der DE-OS 2 217 099 beschriebenen Verfahren hergestellt werden, indem man die entsprechenden Phenole (1), Amine (2) und Aldehyde bzw. Ketone (3) in Gegenwart einer Säure, Mineralsäure oder organischen Säure, bei einem pH-Wert von höchstens 6, vorzugsweise bei einem pH-Wert von 5,5 bis 0,5, der Kondensationsreaktion unterwirft, wobei man diese ein- oder mehrstufig durchführen kann. Beispielsweise ist es möglich, zuerst aus dem Phenol (1) oder dem Amin (2) mit dem Aldehyd bzw. Aceton (3) ein Vorkondensat herzustellen, das dann mit der dritten Komponente, gegebenenfalls unter weiterer Zugabe von Aldehyd oder Aceton, zu dem Kondensationsprodukt (c) umgesetzt wird.

Sowohl die zur Herstellung der Kondensationsprodukte (c) eingesetzten Phenole als auch die eingesetzten Amine können mit allen Substituenten, die an der Kondensationsreaktion nicht beteiligt sind, also neutral verhalten, substituiert sein. Beispielsweise kommen als solche Substituenten Halogenatome, vorzugsweise Chlor- oder Bromatome, Alkylgruppen, vorzugsweise solche mit 1 bis 4 C-Atomen, wie beispielsweise Allyl oder 1-Propenyl, Alkoxygruppen, vorzugsweise mit 1 bis 4 C-Atomen, oder veresterte Carboxylgruppen mit 1 bis 4 C-Atomen in der Alkoholkomponente in Frage.

Als substituierte einwertige Phenole (1) sind beispielsweise geeignet p-Chlorphenol, o-Bromphenol, o-Kresol, p-Kresol, p-Chlor-m-kresol, o-Allylphenol, 2-Propenylphenol, p-Nonylphenol, o-Methoxyphenol, o-Aethoxyphenol, p-Nitrophenol, p-Phenylphenol, o-Phenolsulfonsäure, Thymol, Carvacrol, von den Xylenolen 1,2-Dimethyl-3-oxybenzol, 1,2-Dimethyl-4-oxybenzol und 1,4-Dimethyl-2-oxybenzol und ferner Guajacol.

Die unsubstituierten zweiwertigen einkernigen Phenole (1) sind Brenzcatechin, Resorcin und Hydrochinon.

Als unsubstituierte oder substituierte zweiwertige zweikernige Phenole (1) eignen sich beispielsweise solche der Formel III

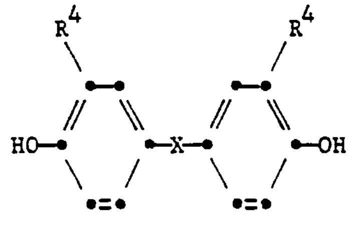

(III)

worin $R^4$ je für ein Wasserstoff-, Halogenatom, Alkyl mit 1 bis 9 C-Atomen, Alkenyl mit bis zu 4 C-Atomen, Alkoxy mit 1 bis 4 C-Atomen und X für eine einfache Bindung, Alkylen mit bis zu 5 C-Atomen, Cycloalkylen, vorzugsweise Cyclohexylen, $-SO_2-$, $-SO-$, $-S-$ oder $-O-$ steht. Als Verbindungen der Formel III, die bekannten Verbindungen darstellen, seien beispielsweise 2,2-Bis-(3-methyl-4-hydroxyphenyl)-propan, 2,2-Bis-(3-chlormethyl-4-hydroxyphenyl)-propan, Bis-(3-tert.-butyl-4-hydroxyphenyl)-sulfon und 2,2-Bis-(3-alkyl-4-hydroxyphenyl)-methan, 4,4'-Dihydroxyphenyl, 2,4-Bis-(4-hydroxyphenyl)-2-methylbutan oder Bis-(4-hydroxyphenyl)-methan genannt.

Als substituierte mehrwertige mehrkernige Phenole (1) eignen sich beispielsweise solche der Formel IV

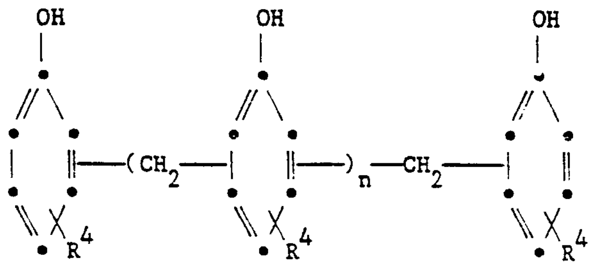

(IV)

worin $R^4$ die gleiche Bedeutung hat wie in Formel III und n für eine Zahl von 1 bis 10 steht.

Die Verbindungen der Formel IV stellen bekannte Verbindungen dar und können hergestellt werden, indem man das mit $R^4$ substituierte Phenol mit Formaldehyd in bekannter Weise zu den entsprechenden Novolaken umsetzt.

Als substituierte aromatische Monoamine (2) sind beispielsweise o-, p- oder m-Toluidin, o,o'- oder o,p-Dimethylanilin, o,o'- oder o,p-Diäthylanilin, o-Methyl-o'-äthylanilin, o-Isopropyl-o'-methylanilin und Sulfanilsäure geeignet.

Die unsubstituierten aromatischen einkernigen Diamine (2) sind o-, m- und p-Phenylendiamin, die gegebenenfalls dialkyliert sein können.

Geeignete unsubstituierte oder substituierte aromatische zweikernige Diamine (2) sind beispielsweise solche der Formel V

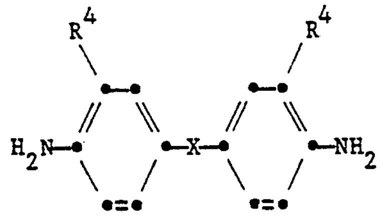

(V)

worin $R^4$ und X die gleiche Bedeutung wie in Formel III haben. Die Verbindungen der Formel V sind bekannt und als Beispiele seien genannt 4,4'-Diamino-diphenylmethan, 3,3'-Dichlor-4,4'-diaminodiphenylmethan, Bis-(4-aminophenyl)-2,2-propan, 4,4'-diamino-diphenyläther, 4,4'-Diaminodiphenylsulfon, 4,4'-Diaminodiphenylsulfid 4,4'-Diaminodiphenyläther und 3,3'-Dimethyl-4,4'-diaminodiphenylmethan.

Als aromatische zweikernige, unsubstituierte oder substituierte Diamine eignen sich beispielsweise auch 1,5-Diaminonaphthalin und seine mono- oder dialkylsubstituierten Derivate.

Zur Herstellung der sauren Kondensationsprodukte (c) können als Aldehyd oder Keton (3) im Prinzip alle Verbindungen mit einer Aldehyd- oder reaktiven Ketogruppe eingesetzt werden. Vorzugsweise setzt man die im Handel erhältlichen Aldehyde oder Ketone ein, wie beispielsweise Formaldehyd, Acetaldehyd, Propionaldehyd, Chloral, Bromal, Benzaldehyd, Furfural oder Aceton, Diäthylketon, Acetophenon oder Benzophenol. Insbesondere verwendet man Form-, Acet- oder Propionaldehyd oder Aceton.

Zur Aushärtung der erfindungsgemässen, härtbaren Gemische kann man diesen gewünschtenfalls Härtungsbeschleuniger bzw. -katalysatoren zusetzen. Als solche Verbindungen sind zum Beispiel die quaternären Ammoniumsalze, Imidazole, Imidazoline oder Phosphoniumsalze organischer oder anorganischer Säuren geeignet. Es können jedoch auch beliebige andere Katalysatoren, welche die Umsetzung einer 1,2-Epoxidgruppe mit einer phenolischen Hydroxylgruppe wirksam beschleunigen.

Die Härtungsbeschleuniger bzw. Katalysatoren werden vorzugsweise in einer Menge von 0,1 bis 5 Gewichts-%, bezogen auf das Gesamtgewicht von Epoxidverbindung (a), Imidverbindung (b) und Kondensationsprodukt (c), eingesetzt.

Die erfindungsgemässen härtbaren Mischungen finden ihren Einsatz vor allem auf den Gebieten der Oberflächenschutzes, der Elektrotechnik, der Laminierverfahren und im Bauwesen. Sie können in jeweils dem speziellen Anwendungszweck angepasster Formulierung, im ungefüllten oder gefüllten Zustand, gegebenenfalls in Form von Lösungen oder Dispersionen, als Lacke, Pressmassen, Sinterpulver, Tauchharze, Spritzgussformulierungen, Imprägnierharze, Bindemittel und insbesondere als Laminierharze verwendet werden.

Gegenstand der Erfindung ist daher auch ein Verfahren zur Herstellung von vernetzten, unlöslichen und unschmelzbaren Kunststoffprodukten aus den erfindungsgemäßen Mischungen, dadurch gekennzeichnet, dass man die Mischungen bei Temperaturen zwischen 120 bis 250 °C, vorzugsweise 150 bis 200 °C, miteinander umsetzt.

Weiterhin ist es möglich, erst ein Reaktionsprodukt aus dem im saurem Medium hergestellten Kondensationsprodukt mit dem Imid herzustellen, indem ein Gemisch dieser beiden Produkte über den Erweichungspunkt des Gemisches erwärmt wird. Dieses Gemisch kann anschliessend, vorzugsweise in Methyläthylketon oder in 2-Methoxypropanol gelöst, mit dem Epoxid gemischt werden.

Die erfindungsgemässe Herstellung der vernetzten, unschmelzbaren Produkte erfolgt in der Regel unter gleichzeitiger Formgebung zu Formkörpern, Flächengebilden, Laminaten, Verklebungen oder Schäumen. Dabei können den härtbaren Massen die in der Technologie der härtbaren Kunststoffe gebräuchlichen Zusätze, wie Füllstoffe, Weichmacher, Pigmente, Farbstoffe, Formtrennmittel, Treibmittel, flammhemmende Stoffe, zugesetzt werden. Als Füllstoffe können zum Beispiel Glasfasern, Glimmer, Quarzmehl, Kaolin, kolloidales Siliziumdioxid oder Metallpulver verwendet werden ; als Formtrennmittel kann zum Beispiel Calciumstearat dienen und als Treibmittel können beispielsweise Azodicarbonsäureamide, α,α'-Azoisobuttersäurenitril oder organische Sulfohydrazide verwendet werden.

Herstellung der Kondensate aus Phenolen, Aminen und Aldehyden bzw. Ketonen im sauren Medium

Kondensat I

In einem Kessel, der mit Rührer, Thermometer, Tropftrichter, Rückflusskühler und Gaseinleitungsrohr versehen ist, werden 1,35 kg o-Kresol und 0,446 kg o-Toluidin vorgelegt, gemischt und die Luft im Kolben wird durch Stickstoff verdrängt. Anschliessend lässt man 0,512 kg wasserfreie Essigsäure zufliessen, wobei eine exotherme Reaktion einsetzt. Das Gemisch wird auf 85 °C erwärmt, bevor innerhalb von 30 Minuten 0,623 kg Paraformaldehyd zugegeben werden. Diese Zugabe bewirkt einen starken Temperaturanstieg des Kolbeninhalts bis auf 115 °C. Nach Abklingen der Exothermie lässt man das Produkt bei etwa 95 °C noch 10 Stunden unter Stickstoff rühren. Anschliessend wird das Heizbad entfernt und man lässt 2,8 kg Aceton zufliessen, wobei die Temperatur auf etwa 60 °C fällt. Dann leitet man während etwa 2 Stunden 0,17 kg Ammoniakgas ein und lässt die inhomogene Flüssigkeit auf Raumtemperatur abkühlen und solange ruhig stehen, bis sich die beiden Schichten vollständig getrennt haben. Die organische Phase wird abgetrennt und unter starkem Rühren während etwa 1 Stunde in 9 kg einer Eis/Wasser-Mischung getropft, wobei eine Festsubstanz ausfällt. Diese wird abfiltriert, der Filterrückstand wird mit viel Wasser gewaschen und dann getrocknet. Es werden 1,92 kg eines hell-beigen Pulvers mit einem Erweichungspunkt von 129 °C gewonnen.

Kondensat II

In einem 4,5 Liter Sulfierkolben, ausgerüstet mit einem Ankerrührer aus Metall, Thermometer, Rückflusskühler und einem Tropftrichter werden 248,3 g (1,0 Mol) 4,4'-Diaminodiphenylsulfon, 648,8 g (6,0 Mol) o-Kresol und 189,1 g (2,1 Mol) Oxalsäure vorgelegt und unter Rühren 528 g (6,5 Mol) 37 %iger, wässriger Formaldehyd innerhalb von 35 Minuten bei einer Temperatur von 83° bis 93 °C zugetropft. Man lässt das Reaktionsgemisch bei Siedetemperatur 3 Stunden und 40 Minuten lang reagieren, neutralisiert anschliessend mit 589,2 g (4,2 Mol) 40 %igem, wässrigem Kaliumhydroxid, dekantiert die wässrige Phase ab, versetzt mit 1 Liter siedendem Wasser, rührt das Reaktionsgemisch 10 Minuten lang, dekantiert ab und wiederholt den Vorgang 6 mal. Nach dem Auswaschen der löslichen Anteile wird das Reaktionsgemisch in 2 Liter Aceton gelöst, die Lösung filtriert und das Filtrat in 36 Liter Eiswasser eingetragen, das mit einem Turborührer kräftig durchmischt wird. Das gefällte Produkt wird abfiltriert, mit Wasser gewaschen und anschliessend bei 50 °C im Vakuum getrocknet.

Man erhält 848,9 g eines gelblichen Pulvers, dessen Erweichungspunkt nach Kofler 148 °C beträgt.

Kondensat III

149,2 g (1,0 Mol) 2,6-Diäthylanilin, 368,4 g eines technisch hergestellten o-Kresolnovolaks (Aequivalentgewicht : 122,8), 101,5 g (1,25 Mol) 37 %iger wässriger Formaldehyd und 107,9 g (0,55 Mol) 55 %ige, wässrige Schwefelsäure werden 4 Stunden und 24 Minuten lang gemäss der Herstellung von Kondensat II zur Reaktion gebracht und anschliessend mit 123,4 g (1,10 Mol) 50 %igem, wässrigem Kaliumhydroxid neutralisiert. Es wird wie bei Kondensat II aufgearbeitet und es werden 518,6 g eines beigen, pulverförmigen Novolaks erhalten, dessen Erweichungspunkt nach Kofler bei 100 °C liegt.

Kondensat IV

Gemäss der Herstellung von Kondensat I werden 226,3 g (1,0 Mol) 3,3'-Dimethyl-4,4'-diaminodiphenylmethan, 648,8 g (6,0 Mol) Kresol, 99,1 g (1,1 Mol) Oxalsäure und 528 g (6,5 Mol) 37 %iger wässriger Formaldehyd 4 Stunden lang zur Reaktion gebracht. Die Aufarbeitung und Reinigung erfolgt wie bei der Herstellung von Kondensat II beschrieben. Man erhält 943,7 g eines gelblichen, pulverförmigen Novolaks, das einen Erweichungspunkt (nach Kofler) von 98 °C besitzt.

Kondensat V

Wie bei der Herstellung von Kondensat II beschrieben, werden 242,4 g (2,0 Mol) 2,4-Dimethylanilin, 491,2 g eines technisch hergestellten o-Kresol-Formaldehyd-Novolaks (mittleres Molekulargewicht $\bar{M}n = 714$ ; OH-Aequivalentgewicht = 122,8), 215,8 g (1,1 Mol) 50 %ige Schwefelsäure und 202,9 g (2,5 Mol) 37 %iger Formaldehyd 4 Stunden und 40 Minuten lang zur Reaktion gebracht. Gemäss Herstellung von Kondensat II wird das Reaktionsgemisch aufgearbeitet, und es werden 689,8 g eines pulverförmigen Novolaks erhalten, das einen Erweichungspunkt (nach Kofler) von 98 °C besitzt und 3,24 % Stickstoff enthält.

Kondensat VI

298,5 g (2,0 Mol) 2-Isopropyl-6-methylanilin, 491,2 g eines technisch hergestellten o-Kresol-Formaldehyd-Novolaks (mittleres Molekulargewicht $\bar{M}n = 714$ ; OH-Aequivalentgewicht = 122,8), 202,9 g

(2,5 Mol) 37 %iger, wässriger Formaldehyd und 215,8 g (1,1 Mol) 50 %iger Schwefelsäure werden analog Kondensat II bei 130-135 °C 4 Stunden und 15 Minuten umgesetzt, mit 246,9 g (2,2 Mol) 50 %iger Kaliumhydroxidlösung neutralisiert und wie in Beispiel 1 beschrieben aufgearbeitet. Es werden 775,8 g eines gelblichen Pulvers erhalten, das nach Kofler einen Erweichungspunkt von 114 °C besitzt. Der Stickstoffgehalt des Reaktionsproduktes beträgt 3,19 %.

Beispiel 1

Es wird eine Lösung hergestellt aus 111 g 4,4'-Methylen-bis-(N-phenylmaleinimid) und 300 g Kondensat II in 275 g Methyläthylketon. Diese Lösung wird 2,5 Stunden zum Sieden erhitzt.

Weiterhin wird eine Lösung hergestellt aus 203 g 1,1,2,2-Tetra-(p-glycidyloxyphenyl)-äthan (ERRA® 0163) und 176 g Tetrabrombisphenol-A-diglycidyläther mit einem Epoxidgehalt von 2,75 Val/kg in 170 g Methyläthylketon. Beide Lösungen werden gemischt.

Mit dieser Lösung wird Glasgewebe (Flächengewicht 200 g/m$^2$) imprägniert, welches danach bei 140 °C getrocknet wird. Es entsteht ein sogenanntes Prepreg. Je 8 Lagen dieses Prepregs werden während 2 Stunden bei 180 °C und einem Druck von 29,4 · $10^4$ Pa verpresst, wobei eine Laminatplatte entsteht.

Nach 2-minutiger Exposition von Laminatproben (5 × 5 m) in den Dampf von kochendem Trichloräthylen zeigen die Proben eine Gewichtszunahme von 0,02 %. Trichloräthylen ist ein bei der Leiterplattenherstellung häufig gebrauchtes Lösungsmittel. Es ist wichtig, dass möglichst wenig davon vom Laminat absorbiert wird.

Beispiel 2

Es wird eine Lösung hergestellt aus 148 g 4,4'-Methylen-bis-(N-phenylmaleinimid) und 333 g Kondensat I in 445 g Methyläthylketon. Diese Lösung wird 2,5 Stunden zum Sieden erhitzt. Ausserdem wird eine Lösung hergestellt aus 192 g 1,1,2,2-Tetra-(p-glycidyloxyphenyl)-äthan, 165 g Tetrabrombisphenol A-diglycidyläther und 240 g Methyläthylketon. Beide Lösungen werden bei Raumtemperatur gemischt.

Wie in Beispiel 1 beschrieben, wird diese Lösung zusammen mit dem Glasgewebe zur Herstellung von Laminaten benutzt, welche eine Trichloräthylenabsorption von nur 0,01 Gew.%, bei Ausführung wie Beispiel 1, zeigen.

Beispiel 3

Eine Lösung aus 220 g 4,4'-Methylen-bis-(N-phenylmaleinimid) und 333 g Kondensat I in 470 g Methyläthylketon wird 0,5 Stunden zum Sieden erhitzt. Weiterhin werden 192 g 1,1,2,2-Tetra-(p-glycidyloxyphenyl)-äthan (ERRA* 0163) und 165 g Tetrabrombisphenol A-diglycidyläther mit einem Epoxidgehalt von 2,75 Val/kg in 240 g Methyläthylketon gelöst.

Diese beiden Lösungen werden bei Raumtemperatur gemischt und dann — wie in Beispiel 1 beschrieben — zusammen mit Glasgewebe zur Herstellung von Laminaten verwendet. Nach Exposition während 2 Minuten in den Dampf von siedendem Trichloräthylen beträgt die Gewichtszunahme 0,01 %.

Beispiel 4

Es wird eine Lösung hergestellt aus 333 g Kondensat I, 264 g 4,4'-Methylen-bis-(N-phenylmaleinimid) und 470 g Methyläthylketon. Diese Lösung wird 2,5 Stunden zum Sieden erhitzt. Eine zweite Lösung wird unter Verwendung der gleichen Epoxidharze wie in Beispiel 3 hergestellt und bei Raumtemperatur mit der ersten vermischt. Die Mischung beider Lösungen wird wie in Beispiel 1 zur Herstellung von Glasfaserlaminaten eingesetzt. Die Trichloräthylenaufnahme unter den in Beispiel 1 angegebenen Bedingungen beträgt 0,02 Gewichts-%.

Beispiel 5

Eine Lösung aus 792 g 4,4'-Methylen-bis-(N-phenylmaleinimid) und 999 g Kondensat I in 1,2 kg Methyläthylketon wird 2,5 Stunden zum Sieden erhitzt. Weiterhin werden 468 g N,N,N',N'-Tetraglycidyl-4,4'-diaminodiphenylmethan mit einem durchschnittlichen Epoxidgehalt von 8,0 Val/kg und 297 g Tetrabrombisphenol A-diglycidyläther in 400 g Methyläthylketon gelöst. Diese beiden Lösungen werden bei Raumtemperatur gemischt und dann, wie in Beispiel 1 beschrieben, zusammen mit Glasgewebe zur Herstellung von Laminaten verwendet. Die Trichloräthylendampfaufnahme unter den in Beispiel 1 angegebenen Bedingung beträgt 0,03 Gewichts-%.

Beispiel 6

Es wird eine Lösung hergestellt aus 194 g 4,4'-Methylen-bis-(N-phenylmaleinimid) und 265 g Kondensat III in 300 g Methyläthylketon. Diese Lösung wird 2,5 Stunden auf 84 °C erhitzt. Ausserdem

wird eine Lösung bereitet aus 138 g 1,1,2,2-Tetra-(p-glycidyloxyphenyl)-äthan (ERRA® 0163), 121 g Tetrabrombisphenol-A-diglycidyläther und 160 g Methyläthylketon. Beide Lösungen werden bei Raumtemperatur vermischt. Wie in Beispiel 1 beschrieben, wird die Mischung beider Lösungen zusammen mit Glasgewebe zur Laminatherstellung verwendet. Die Trichloräthylenabsorption beträgt unter den in Beispiel 1 angegebenen Bedingungen 0,02 Gewichts-%.

Beispiel 7

Eine Lösung aus 264 g 4,4'-Methylen-bis-(N-phenylmaleinimid) und 333 g Kondensat I in 420 g Methyläthylketon wird 1,5 Stunden zum Sieden erhitzt. Weiterhin werden 210 g eines glycidylierten Phenol-Novolakharzes mit einem durchschnittlichen Epoxidgehalt von 5,6 Val/kg und 121 g Tetrabrombisphenol A-diglycidyläther in 200 g Methyläthylketon gelöst. Diese beiden Lösungen werden wie in Beispiel 1 beschrieben, zusammen mit Glasgewebe zur Herstellung von Laminaten verwendet. Sie besitzen eine ausgezeichnete Lösungsmittelbeständigkeit, wie die Trichloräthylenaufnahme von nur 0,01 Gewichts-% zeigt.

Beispiel 8

Es wird eine Lösung hergestellt aus 399,6 g Kondensat I, 316,8 g 4,4'-Methylen-bis-(N-phenylmaleinimid) und 520 g Methyläthylketon. Sie wird 2,5 Stunden zum Sieden erhitzt. Eine zweite Lösung wird erhalten aus 266 g 1,1,2,2-Tetra-(p-glycidyloxyphenyl)-äthan, 145 g Tetrabrombisphenol A-diglycidyläther und 250 g Methyläthylketon, die mit der ersten Lösung bei Raumtemperatur vereinigt wird. Die Mischungen beider Lösungen wird wie in Beispiel 1 zur Herstellung von Glasfaserlaminaten verwendet. Die Trichloräthylenaufnahme beträgt unter den in Beispiel 1 angegebenen Bedingungen 0,02 Gewichts-% und der dielektrische Verlustfaktor tg $\delta$ beträgt 0,008 bei 150 °C und 50 Hz/1 000 V.

Beispiel 9

558 g des Kondensats I und 442 g 4,4'-Methylen-bis-(N-phenylmaleinimid) werden in einem Kokneter homogen gemischt und auf etwa 120-140 °C erwärmt. 597 g des erhaltenen Produkts werden in 597 g 1-Methoxypropanol gelöst. Ausserdem wird eine Lösung hergestellt aus 153 g N,N,N',N'-Tetraglycidyl-4,4'-diaminodiphenylmethan mit einem durchschnittlichen Epoxidgehalt von 8,0 Val/kg und 99 g Tetrabrombisphenol-A-diglycidyläther in 150 g Methyl-äthylketon gelöst. Diese beiden Lösungen werden bei Raumtemperatur gemischt und dann, wie in Beispiel 1 beschrieben, zusammen mit Glasgewebe zur Herstellung von Laminaten benutzt. Die Trichloräthylendampfaufnahme unter den in Beispiel 1 angegebenen Bedingungen beträgt 0,02 Gewichts-%.

Beispiel 10

Es wird eine Lösung hergestellt aus 300 g des Kondensats IV, 145 g 4,4'-Methylen-bis-(N-phenylmaleinimid) und 280 g Methyläthylketon ; sie wird 4 Stunden unter Rückflusskühlung zum Sieden erhitzt. Eine zweite Lösung wird bereitet aus 211 g 1,1,2,2-Tetra-(p-glycidyloxyphenyl)-äthan, 182 g Tetrabrombisphenol-A-diglycidyläther und 260 g Methyläthylketon. Die beiden Lösungen werden gemischt ; die Mischung wird, wie in Beispiel 1 beschrieben, zur Herstellung von Glasfaserlaminaten benutzt. Gewünschtenfalls können noch 1,5 g 2-Phenylimidazol zur fertigen Imprägnierlösung gegeben werden. Die Trichloräthylenaufnahme der Laminate unter den in Beispiel 1 angegebenen Bedingungen beträgt 0,01 Gewichts-%.

Beispiel 11

Es wird eine Lösung hergestellt aus 290 g Kondensat V, 230 g 4,4'-Methylen-bis-(N-phenylmaleinimid) in 410 g 1-Methoxypropanol-2, indem die Mischung 4-6 Stunden auf 60 °C erhitzt wird. Eine zweite Lösung wird hergestellt aus 133 g N,N,N',N'-Tetraglycidyl-4,4'-diaminodiphenylmethan mit einem durchschnittlichen Epoxidgehalt von 8,0 Val/kg und 86 g Tetrabrombisphenol-A-diglycidyläther in 120 g Methyläthylketon. Die beiden Lösungen werden gemischt, die Mischung wird, wie in Beispiel 1 beschrieben, zur Herstellung von Glasfaserlaminaten benutzt. Ihre Aufnahme von Trichloräthylen unter den in Beispiel 1 angegebenen Bedingungen beträgt 0,02 Gewichts-%.

Beispiel 12

Eine Lösung aus 290 g Kondensat VI und 230 g 4,4'-Methylen-bis-(N-phenylmaleinimid) ind 410 g 1-Methoxypropanol-2 wird 6 Stunden lang auf etwa 95 °C erwärmt. Zu dieser Lösung gibt man eine zweite Lösung, die aus 137 g N,N,N',N'-Tetraglycidyl-4,4'-diaminodiphenylmethan mit durchschnittlichem Epoxidgehalt von 8,0 Val/kg, 82 g Tetrabrombisphenol-A-diglycidyläther und 100 g Methyläthylketon erhalten wird. Die Mischung der beiden Lösungen wird, wie im Beispiel 1 beschrieben, zur Herstellung von Glasfaserlaminaten benutzt. Ihre Aufnahme an Trichloräthylen unter den in Beispiel 1 angegebene

Bedingungen beträgt 0,03 Gewichts-%.

Beispiel 13

Es wird eine Lösung hergestellt aus 333 g Kondensat I 358 g 4,4'-Methylen-bis-(N-phenylmaleinimid) und 460 g Methyläthylketon ; sie wird 2 Stunden zum Sieden erhitzt. Anschliessend gibt man eine Lösung von 153 g N,N,N',N'-Tetraglycidyl-4,4'-diaminodiphenylmethan mit einem durchschnittlichen Epoxidgehalt von 8,0 Val/kg und 99 g Tetrabrom-bisphenol-A-diglycidyläther in 120 g Methyläthylketon hinzu. Die Mischung der beiden Lösungen wird, wie in Beispiel 1 beschrieben, zur Herstellung von Glasfaserlaminaten benutzt. Ihre Aufnahme von Trichloräthylen unter den in Beispiel 1 angegebenen Bedingungen beträgt nur 0,01 Gewichts-%.

**Patentansprüche**

1. Härtbares Gemisch, enthaltend
(a) Epoxidverbindungen mit durchschnittlich mehr als einer 1,2-Epoxidgruppe pro Molekül,
(b) Mono- oder Polyimide ungesättigter Dicarbonsäuren der allgemeinen Formel I

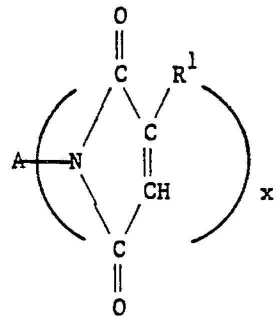

(I)

in der A einen x-wertigen organischen Rest mit mindestens 2 und höchstens 30 C-Atomen, $R^1$ ein H-Atom oder Methyl und x die Zahl 1, 2 oder 3 bedeuten, und
(c) im sauren Medium hergestellte Kondensationsprodukte aus Phenolen, Aminen und Aldehyden oder Ketonen, die erhältlich sind, indem man
(1) substituierte einwertige Phenole, die in p-Stellung und in einer der beiden o-Stellungen oder in beiden o-Stellungen unsubstituiert sind, unsubstituierte zweiwertige einkernige Phenole oder unsubstituierte oder substituierte zwei- oder mehrwertige, zwei- oder mehrkernige Phenole, die mindestens zwei zur Umsetzung mit Aldehyd oder Keton reaktive Kernstellen aufweisen,
(2) substituierte aromatische Monoamine, die mindestens eine, vorzugsweise mindestens zwei, zur Umsetzung mit Aldehyd oder Keton reaktive Kernstellen aufweisen, unsubstituierte aromatische ein- oder zweikernige Diamine oder substituierte aromatische ein- oder zweikernige Diamine, die mindestens zwei zur Umsetzung mit Aldehyd oder Keton reaktive Kernstellen aufweisen und
(3) Aldehyde oder Ketone bei einem pH-Wert von höchstens 6 miteinander umsetzt, wobei im Reaktionsgemisch das Mischungsverhältnis von Phenol zu Amin zu Aldehyd oder Keton 1 : 1 : 1,2 bis 6 : 1 : 8 Mole und im Falle eines substituierten mehrwertigen mehrkernigen Phenols 0,344 : 1 : 1,2 bis 6 : 1 : 8 Mole beträgt, und gegebenenfalls (d) Härtungsbeschleuniger in einer Menge von 0,01 bis 10 Gew.%, bezogen auf das Gesamtgewicht von (a), (b) und (c),
wobei im härtbaren Gemisch pro 1 Aminwasserstoffäquivalent mindestens 1 Aequivalent Imidgruppe und pro 1 Epoxidäquivalent mindestens 1 Aequivalent phenolische Hydroxylgruppe vorhanden sind.

2. Mischungen gemäss Anspruch 1, dadurch gekennzeichnet, dass sie als Epoxidverbindungen (a) solche mit aromatischen Gruppierungen im Molekül enthalten.

3. Mischungen gemäss Anspruch 1, dadurch gekennzeichnet, dass sie als Epoxidverbindungen (a) Polyglycidyläther von zwei- oder mehrwertigen zwei- oder mehrkernigen Phenolen enthalten.

4. Mischungen gemäss Anspruch 1, dadurch gekennzeichnet, dass sie als Epoxidverbindungen (a) N-Glycidylverbindungen aromatischer Amine enthalten.

5. Mischungen gemäss Anspruch 1, dadurch gekennzeichnet, dass sie als Verbindung (b) Bismaleinimide der Formel I enthalten, worin A einen aromatischen oder aliphatischen Rest und $R^1$ ein H-Atom bedeuten und x für die Zahl 2 steht.

6. Mischungen gemäss Anspruch 1, dadurch gekennzeichnet, dass sie als Verbindung (b) Bismaleinimide der Formel I enthalten, worin A einen aromatischen Rest darstellt, $R^1$ ein H-Atom bedeutet und x für die Zahl 2 steht.

7. Mischungen gemäss Anspruch 1, dadurch gekennzeichnet, dass sie als Kondensationsprodukte (c) solche enthalten, worin die Reaktionskomponente (1) substituierte einwertige Phenole, die in p-Stellung und in einer der beiden o-Stellungen oder in beiden o-Stellungen unsubstituiert sind, oder

substituierte zwei- oder mehrwertige, zwei- oder mehrkernige Phenole, die mindestens zwei zur Umsetzung mit Aldehyd oder Keton reaktive Kernstellen aufweisen, darstellen.

8. Mischungen gemäss Anspruch 7, dadurch gekennzeichnet, dass sie als Kondensationsprodukte (c) solche enthalten, worin die Reaktionskomponente (1) o- oder p-Alkylphenol oder in o,o'-Stellung substituiertes zweiwertiges zweikerniges Phenol darstellt.

9. Mischungen gemäss Anspruch 1, dadurch gekennzeichnet, dass sie als Kondensationsprodukte (c) solche enthalten, worin die Reaktionskomponente (2) substituierte aromatische Monoamine, die mindestens eine, vorzugsweise zwei, zur Umsetzung mit Aldehyd oder Keton reaktive Kernstellen aufweisen, oder unsubstituierte oder substituierte aromatische zweikernige Diamine, die mindestens zwei zur Umsetzung mit Aldehyd oder Keton reaktive Kernstellen aufweisen, darstellen.

10. Mischungen gemäss Anspruch 7, dadurch gekennzeichnet, dass sie als Kondensationsprodukte (c) solche enthalten, worin die Reaktionskomponente (2) o- oder p-Toluidin, 2,6-Diäthylanilin, 4,4'-Diaminodiphenylsulfon oder 3,3'-Dimethyl-4,4'-diaminodiphenylmethan darstellt.

11. Mischungen gemäss Anspruch 1, dadurch gekennzeichnet, dass sie als Kondensationsprodukte (c) solche enthalten, worin die Reaktionskomponente (3) Form-, Acet- oder Propionaldehyd oder Aceton ist.

12. Mischungen gemäss Anspruch 1, dadurch gekennzeichnet, dass sie als Kondensationsprodukte (c) solche enthalten, die bei einem pH-Wert von 5,5 bis 0,5 kondensiert worden sind.

13. Mischungen gemäss Anspruch 1, dadurch gekennzeichnet, dass sie als Kondensationsprodukte (c) solche enthalten, die aus einem Reaktionsgemisch mit einem Mischungsverhältnis von Phenol zu Amin zu Aldehyd oder Keton von 2 : 1 : 4 bis 6 : 1 : 8 erhalten worden sind.

14. Verfahren zur Herstellung von vernetzten, unlöslichen und unschmelzbaren Kunststoffprodukten aus den härtbaren Mischungen gemäss Anspruch 1, dadurch gekennzeichnet, dass man die Mischungen im Temperaturbereich von 120 bis 250 °C, vorzugsweise von 150 bis 200 °C, aushärtet.

**Claims**

1. A curable mixture containing

(a) epoxy resins having on average more than one 1,2-epoxy group per molecule,

(b) monoimides or polyimides of unsaturated dicarboxylic acids of the general formula I

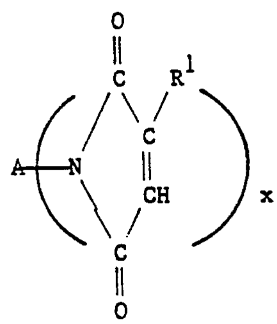

(I)

in which A is an x-valent organic radical having at least 2 and at most 30 C atoms, $R^1$ is an H atom or methyl, and x is 1, 2 or 3, and

(c) products of condensing phenols, amines and aldehydes or ketones in an acid medium by reacting with one another at a pH no higher than 6

(1) substituted monohydric phenols which are unsubstituted in the p-position and in one of the two o-positions or in both o-positions, unsubstituted dihydric mononuclear phenols or unsubstituted or substituted dihydric or polyhydric dinuclear or polynuclear phenols which have at least two reactive ring positions for reaction with aldehyde or ketone,

(2) substituted aromatic monoamines which have at least one, preferably at least two, reactive ring positions for reaction with aldehyde or ketone, unsubstituted aromatic mononuclear or dinuclear diamines or substituted aromatic mononuclear or dinuclear diamines which have at least two reactive ring positions for reaction with aldehyde or ketone, and

(3) aldehydes or ketones, in a mixing ratio in the reaction mixture of phenol to amine to aldehyde or ketone of 1 : 1 : 1.2 to 6 : 1 : 8 moles, and in the case of a substituted polyhydric polynuclear phenol 0.344 : 1 : 1.2 to 6 : 1 : 8 moles, and if desired (d) curing accelerators in an amount of 0.01 to 10 % by weight, based on the total weight of (a), (b) and (c),
and in the presence, in the curable mixture, of at least 1 equivalent of imide group per equivalent of amine-hydrogen and of at least 1 equivalent of phenolic hydroxyl group per epoxy equivalent.

2. A mixture according to claim 1, which contains as epoxy compounds (a) those having aromatic groupings in the molecule.

3. A mixture according to claim 1, which contains as epoxy compounds (a) polyglycidyl ethers of

dihydric or polyhydric dinuclear or polynuclear phenols.

4. A mixture according to claim 1, which contains as epoxy compounds (a) N-glycidyl compounds of aromatic amines.

5. A mixture according to claim 1, which contains as compound (b) bis-maleimides of the formula I in which A is an aromatic or aliphatic radical, $R^1$ is an H atom, and x is 2.

6. A mixture according to claim 1, which contains as compound (b) bis-maleimides of the formula I in which A is an aromatic radical, $R^1$ is an H atom, and x is 2.

7. A mixture according to claim 1, which contains as condensation products (c) those wherein reaction component (1) takes the form of substituted monohydric phenols which are unsubstituted in the p-position and in one of the two o-positions or in both o-positions, or of substituted dihydric or polyhydric dinuclear or polynuclear phenols which have at least two reactive ring positions for reaction with aldehyde or ketone.

8. A mixture according to claim 7, which contains as condensation products (c) those wherein reaction component (1) takes the form of o- or p-alkylphenol or of dihydric dinuclear phenol which is substituted in the o,o′-position.

9. A mixture according to claim 1, which contains as condensation products (c) those wherein reaction component (2) takes the form of substituted aromatic monoamines which have at least one, preferably two, reactive ring positions for reaction with aldehyde or ketone, or of unsubstituted or substituted aromatic dinuclear diamines which have at least two reactive ring positions for reaction with aldehyde or ketone.

10. A mixture according to claim 7, which contains as condensation products (c) those wherein reaction component (2) is o- or p-toluidine, 2,6-diethylaniline, 4,4′-diaminodiphenyl sulfone or 3,3′-dimethyl-4,4′-diaminodiphenylmethane.

11. A mixture according to claim 1, which contains as condensation products (c) those wherein reaction component (3) is formaldehyde, acetaldehyde, propionaldehyde or acetone.

12. A mixture according to claim 1, which contain as condensation products (c) those which have been condensed at pH 5.5-0.5.

13. A mixture according to claim 1, which contains as condensation products (c) those which have been obtained from a reaction mixture having a mixing ratio of phenol to amine to aldehyde or ketone of 2 : 1 : 4 to 6 : 1 : 8.

14. A process for preparing crosslinked, insoluble and infusible plastic products from the curable mixture according to claim 1, which comprises curing the mixture within a temperature range from 120 to 250 °C, preferably from 150 to 200 °C.

**Revendications**

1. Mélange durcissable renfermant :

(a) des composés époxydiques qui contiennent en moyenne, par molécule, plus d'un radical époxy-1,2,

(b) des mono-imides ou poly-imides d'acides dicarboxyliques insaturés qui répondent à la formule I :

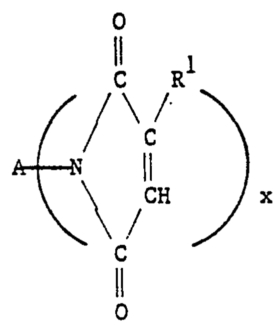

(I)

dans laquelle A représente un radical organique dont la valence est égale à x et qui contient au moins 2 et au plus 30 atomes de carbone, $R^1$ représente un atome d'hydrogène ou un radical méthyle et x désigne un nombre égal à 1, à 2 ou à 3, et

(c) des produits de condensation préparés en milieu acide à partir de phénols, d'amines et d'aldéhydes ou de cétones, produits que l'on peut obtenir en faisant réagir les uns avec les autres, à un pH au plus égal à 6,

(1) des monophénols substitués qui sont dépourvus de substituants en position para et en l'une des deux positions ortho ou en les deux positions ortho, des diphénols non substitués à un seul noyau, ou des diphénols ou poly-phénols à deux ou plus de deux noyaux, substitués ou non, qui comportent au moins deux sites nucléaires capables de réagir avec un aldéhyde ou une cétone,

(2) des monoamines aromatiques substituées qui comportent au moins un mais de préférence au moins deux sites nucléaires capables de réagir avec un aldéhyde ou une cétone, des diamines aromatiques non substituées à un ou deux noyaux, ou des diamines aromatiques substituées à un ou deux noyaux, qui comportent au moins deux sites nucléaires capables de réagir avec un aldéhyde ou une cétone, et

(3) des aldéhydes ou des cétones, le rapport molaire (phénol)/(amine)/(aldéhyde ou cétone) dans le mélange réactionnel pouvant aller de 1 : 1 : 1,2 à 6 : 1 : 8 et, dans le cas d'un poly-phénol substitué à plusieurs noyaux, de 0,344 : 1 : 1,2 à 6 : 1 : 8, et éventuellement (d) des accélérateurs de durcissement et une quantité de 0,01 à 10 % en poids par rapport au poids total de (a), (b) et (c), le mélange durcissable contenant, pour 1 équivalent d'hydrogène aminé, au moins 1 équivalent de radical imide et, pour 1 équivalent d'époxy, au moins 1 équivalent de radical hydroxy phénolique.

2. Mélanges selon la revendication 1 caractérisés en ce qu'ils contiennent, comme composés époxydiques (a), des composés de ce genre dont la molécule contient des radicaux aromatiques.

3. Mélanges selon la revendication 1 caractérisés en ce qu'ils contiennent, comme composés époxydiques (a), des éthers polyglycidyliques de diphénols ou de poly-phénols à deux ou à plus de deux noyaux.

4. Mélanges selon la revendication 1 caractérisés en ce qu'ils contiennent, comme composés époxydiques (a), des dérivés N-glycidyliques d'amines aromatiques.

5. Mélanges selon la revendication 1 caractérisés en ce qu'ils contiennent, comme composés (b), des bis-maléimides de formule I dans lesquels A représente un radical aromatique ou aliphatique, $R^1$ un atome d'hydrogène et x le nombre 2.

6. Mélanges selon la revendication 1 caractérisés en ce qu'ils contiennent, comme composés (b), des bis-maléimides de formule I dans lesquels A représente un radical aromatique, $R^1$ un atome d'hydrogène et x le nombre 2.

7. Mélanges selon la revendication 1 caractérisés en ce qu'ils contiennent, comme produits de condensation (c), des produits de ce genre dans lesquels la composante réactionnelle (1) est constituée de mono-phénols substitués dont la position para et l'une des deux positions ortho ou les deux positions ortho sont dépourvues de substituants, ou de diphénols ou poly-phénols substitués à deux ou plus de deux noyaux, qui comportent au moins deux sites nucléaires capables de réagir avec un aldéhyde ou une cétone.

8. Mélanges selon la revendication 7 caractérisés en ce qu'ils contiennent, comme produits de condensation (c), des produits de ce genre dans lesquels la composante réactionnelle (1) est un o- ou un p-alkylphénol ou un diphénol à deux noyaux substitués en position o,o'.

9. Mélanges selon la revendication 1 caractérisés en ce qu'ils contiennent, comme produits de condensation (c), des produits de ce genre dans lesquels la composante réactionnelle (2) est constituée de monoamines aromatiques substituées qui comportent au moins un et de préférence deux sites nucléaires capables de réagir avec un aldéhyde ou une cétone, ou des diamines aromatiques à deux noyaux, substitués ou non, qui comportent au moins deux sites nucléaires capables de réagir avec un aldéhyde ou une cétone.

10. Mélanges selon la revendication 7 caractérisés en ce qu'ils contiennent, comme produits de condensation (c), des produits de ce genre dans lesquels la composante réactionnelle (2) est l'o-toluidine, la p-toluidine, la diéthyl-2,6 aniline, la diamino-4,4' diphénylsulfone ou le diméthyl-3,3' diamino-4,4' diphénylméthane.

11. Mélanges selon la revendication 1 caractérisés en ce qu'ils contiennent, comme produits de condensation (c), des produits de ce genre dans lesquels la composante réactionnelle (3) est le formaldéhyde, l'acétaldéhyde, le propionaldéhyde ou l'acétone.

12. Mélanges selon la revendication 1 caractérisés en ce qu'ils contiennent, comme produits de condensation (c), des produits de ce genre qui ont été condensés à un pH compris entre 5,5 et 0,5.

13. Mélanges selon la revendication 1 caractérisés en ce qu'ils contiennent, comme produits de condensation (c), des produits de ce genre qui ont été obtenus à partir d'un mélange réactionnel dans lequel la proportion phénol/amine/aldéhyde ou cétone est de 2 : 1 : 4 à 6 : 1 : 8.

14. Procédé de fabrication de produits en matières plastiques réticulées, insolubles et infusibles, à partir des mélanges durcissables selon la revendication 1, procédé caractérisé en ce qu'on durcit les mélanges dans l'intervalle de température allant de 120 à 250 °C, de préférence de 150 à 200 °C.